# EUROPEAN PATENT APPLICATION

(11) **EP 3 970 469 A1**
(43) Date of publication of application: **23.03.2022**
(21) Application number: 20020494.9
(22) Date of filing: 27.10.2020
(51) Int. Cl.: A01C 23/04, B01F 15/04, G05D 11/00, F04B 9/113

(54) **AUTONOMOUS PUMPING DEVICE FOR FERTIGATION**

(30) Priority: 16.09.2020 RO 202000585
(71) Applicant: Institutul de Cercetari pentru Hidraulica si Pneumatica din Bucuresti INOE, Bucuresti (RO)
(72) Inventor: Pavel, Ioan, Jud. Ilfov, Popesti Leordeni (RO); Sovaiala, Gheorghe, Bucuresti, Sector 4 (RO); Matache, Gabriela, Bucuresti, Sector 4 (RO); Necula, Carmen, Jud. Ilfov, Popesti Leordeni (RO); Manea, Dragos, Bucuresti, Sector 1 (RO)
(74) Representative: Strenc, Alexandru Cristian

(57) **Abstract**

The autonomous pumping device for use in fertigation can be used for irrigation with fertilizer dosing. It is connected in line on the irrigation pipe, and the control and actuation of the pistons / rod pumping group is done by means of hydraulic devices, using merely the energy from the pressure and flow of water in the irrigation pipeline. The device consists of a cylinder (CPL) with two in-line pistons, one of which with diameter (D1), intended to control the oscillating motion, and the other one, smaller, with diameter (D2), intended to inject the fertilizer solution, a directional control valve (VD1), intended to actuate the pumping device, and a directional control valve (VD2), intended to change the direction of injecting by means of stroke limiting devices (CC1, CC2), five check valves (SS1-SS5), two tap valves (R1, R2) and three quick couplings (CR1-CR3).

## Description

### Technical Field

Present invention relates to an autonomous pumping device for use in fertigation which performs the injecting and mixing of doses of water and fertilizer solutions in the irrigation pipeline used is the field of household or industrial equipment used for irrigation with fertilizer dosing.

Current solution under patenting process was achieved during the implementation of the PREPARE project, code MY SMIS 107874, financed by European Regional Development Fund through Competitiveness Operational Programme 2014-2020.

### Background Art

Fertigation is currently practiced by using diaphragm pumps, single acting piston pumps or differential piston pumps. Most types of dispensers that dose fertilizers are connected to the supply pipeline of the irrigation system and inject, in a controlled manner, fertilizer solutions into the irrigation water. They are electrically or mechanically driven by various other driving devices. There are also some solutions that work without any external energy source, as they are operated by the flow and pressure themselves of water in the irrigation network. Examples include: DOSATRON piston dosing pump - France (https://www.dosatronusa.com/fertilizer-injectors-for-irrigation) or DOSMATIC dosing pump - USA (https://hydrosystemsco.com/irrigation-horticulture/). Both variants have quite complicated technical solutions. They make the fertilizer mixture with in-line pistons of different sizes which provide volume ratios of water and fertilizer flows on one of the piston strokes, while on the other stroke prepare the volumes of water and substance for injection. The change of direction for the piston / rod injecting group is done by means of a lever-and-spring swinging system that shows inertia in switching, which does not allow increasing the working frequency. The failure rate of the equipment can also increase by breaking of the lamellar spring or blocking of the swinging mechanism. The assembly of the dosing pumps can be done in line or in parallel; each solution has its own component parts and requires assembly work. Returning to the irrigation solution without fertigation, or moving the equipment to another pipeline also requires assembly work. Improper operation causes insufficient or excess water with fertilizers in the soil, which could lead to slow growth or prolongation of the growing season, with effects on the production achieved, consumer health or the environment. The adjustment of the fertilizer mixture is done by changing the volume of the mixing chamber.

### Summary of invention

Technical problem that the autonomous pumping device for use in fertigation, according to the invention, solves consists in the design of a new solution for the control and actuation of the piston / rod pumping group by means of hydraulic devices, with good response to higher working frequency, operating with fast and firm control, using merely the energy from the pressure and flow of the water in the irrigation pipeline. The device performs the injection of fertilizer solution with water and solution ratios in both directions of movement of the pistons. Moreover, apart from the constant ratio of the injected volumes, additional water intake may be allowed, resulting in a reduction in the amount of the fertilizer solution in the fertigation pipeline to any concentration. Also, in this working mode, the dosing of fertilizer solution can be done by adjusting the stroke or the working frequency of the injection pistons. The device is mounted in line on the irrigation pipe using quick couplings and allows the user to stop fertilizing and continue irrigating without detaching the equipment.

Advantages of the invention are as follows:
- The device is mounted in line on the irrigation pipe, is autonomous and does not require other energy sources for operation;
- It provides doses in volume ratios of water / fertilizer solution in both directions of operation;
- It works in two ways: by volume dosing exclusively with the volumes of the injection pistons or by diluting the concentration of the fertilizer solution with additional water intake;
- The solution concentration at the fertigation pipeline can also be adjusted by adjusting the working frequency or changing the stroke of the pistons;
- One can continue irrigating without removing the device;
- It has increased reliability due to the simplicity of construction and the use of general utility classic components, in current manufacture;
- It eliminates the risk of pollution of the environment and groundwater, with direct implications for human health;
- It does not require highly qualified personnel for operation and maintenance.

### Brief description of drawings

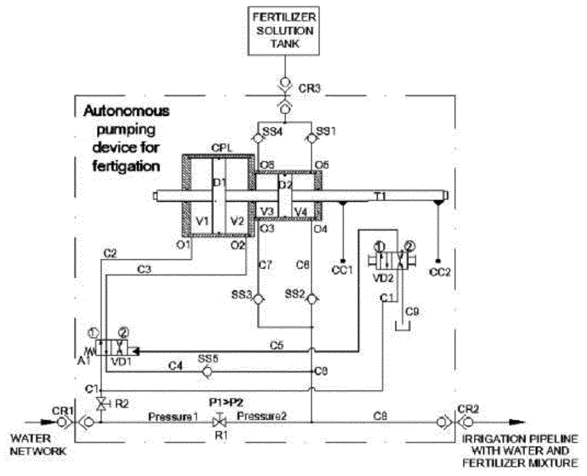

The following is a detailed embodiment of the invention also in connection with **Fig. 1****.** - Schematic diagram of the autonomous pumping device for use in fertigation.

### Description of embodiments

According to the invention, the autonomous pumping device for use in fertigation comprises a cylinder (CPL) with two in-line pistons, one of which with diameter (D1) intended to control the movement of the pistons, and the other one with a smaller diameter (D2) intended to inject the fertilizer solution, five check valves (SS1-SS5), two tap valves (R1) and (R2), a directional control valve (VD2) mechanically controlled by two stroke limiting devices (CC1) and (CC2), and a directional control valve (VD1) hydraulically controlled by another directional control valve (VD2).

The pumping device is equipped with quick couplings (CR1, CR2) by means of which it is mounted in line on the pipe of the water network for irrigation, and by a quick coupling (CR3) it is connected to the fertilizer solution tank.

The system is switched on by opening the tap valve (R2). Thus, the water from the network passes through the directional valve (VD1) which is in position (1) spring, through a circuit (C1) to another circuit (C2), and through an orifice (01) it enters a chamber (V1), while another chamber (V2) directs its volume of water through circuits (C3) and (C4) along the chain (C3, VD1, C4, SS5) to an irrigation pipeline (C8), and thus the rod / piston assembly (T) moves to the right. At the same time, the volume of fertilizer solution in a chamber (V4) is injected into a pipeline (C8) through a circuit (C6) and a check valve (SS2), while a chamber (V3) absorbs the fertilizer solution for the next cycle through an inlet / outlet orifice (06) and a check valve (SS4). Through this working sequence a volume of water (V2) and a volume of fertilizer solution (V4) were directed to the fertigation pipeline (C8).

At the end of the stroke a control lever (CC1) switches the directional control valve (VD2) to position (1); the water passes from the circuit (C1) to the circuit (C5) and hydraulically switches the directional control valve (VD2) to position (2). Thus, the water passes from the circuit (C1) to the circuit (C3), and through the orifice (02) it enters the chamber (V2). As a consequence, the piston / rod assembly moves to the left, and now the chamber (V1) injects the volume of water through the circuit (C2, C4, SS5) into the irrigation pipeline (C8), and the chamber (V3) injects fertilizer solution through the circuit (03, C7, SS3) also in the irrigation pipeline (C8). The chamber (V4) absorbs substance for the next cycle. The process repeats when at the other end of the stroke the control lever (CC2) switches the directional control valve (VD2) to position (2), discharging the control circuit (C5) to the atmosphere, and the spring (A1) resets the directional control valve (VD1) to position (1).

The amount of injected mixture can be adjusted in two ways:
- By throttling the control circuit with the tap valve (R2), thus achieving a lower frequency of filling the chambers (V1, V2);
- By changing the position of the stroke limiting devices (CC1) and (CC2), thus decreasing the stroke of the pistons (D1, D2) and implicitly of the injected volumes.

For both operating variants it is possible to dilute the concentration of fertilizer solution in any proportion by opening the tap valve (R1). Thus, in addition to the volumetric dosing provided by the volumes of the pistons (V2 / V4) and (V1 / V3), a certain amount of water is added from the irrigation network. In order for the device to work properly, the pressure in the fertilizer pipeline (C8) must be lower than the inlet pressure to the irrigation water system.

The device is switched off by closing the tap valve (R2), and the user can continue irrigating without fertigation by opening the tap valve (R1).

## Claims

1. Autonomous pumping device for use in fertigation which operates using the pressure and flow of water in the irrigation pipeline, **characterized in that** it comprises a cylinder (CPL) with two in-line pistons, one of which with diameter (D1), intended to control the oscillating motion, and the other one, smaller, with diameter (D2), intended to inject the fertilizer solution, a directional control valve (VD1), intended to actuate the pumping device, and a directional control valve (VD2), intended to change the direction of injecting by means of stroke limiting devices (CC1, CC2), five check valves (SS1-SS5), two tap valves (R1, R2) and three quick couplings (CR1-CR3);

2. Autonomous pumping device for use in fertigation of claim 1, further **characterized in that** the injecting of water and fertilizer solution is performed in both directions of movement of said pistons, with equal volume ratios, (V2/V4) and (V1/V3);

3. Autonomous pumping device for use in fertigation of claim 1, further **characterized in that** said tap valve (R1) enables additional water intake, while maintaining a constant ratio of said volumes (V2/V4) and (V1/V3), resulting in a decrease in the concentration of the fertilizer solution in the fertigation pipeline to any desired concentration;

4. Autonomous pumping device for use in fertigation of claim 1, further **characterized in that** the dosing of fertilizer solution can also be done by adjusting the stroke of said injection pistons, by changing the position of said stroke limiting devices (CC1) and (CC2);

5. Autonomous pumping device for use in fertigation of claim 1, further **characterized in that** the dosing of fertilizer solution can be done by changing the working frequency of said injection pistons by throttling the control circuit by means of said tap valve (R2).
